**Europäisches Patentamt**

**European Patent Office**

**Office européen des brevets**

(19)

(11) Publication number: **0 045 250**
**A1**

(12) # EUROPEAN PATENT APPLICATION

(21) Application number: 81401175.5

(22) Date of filing: 22.07.81

(51) Int. Cl.³: **F 03 G 7/06**

(30) Priority: **25.07.80 US 172176**
**25.06.81 US 277381**

(43) Date of publication of application: **03.02.82**
**Bulletin 82/5**

(84) Designated Contracting States: **AT BE CH DE FR GB IT LI LU NL SE**

(71) Applicant: **Innovative Technology International, Inc., 10747-3 Tucker street, Beltsville, Maryland 20705 (US)**

(72) Inventor: **Wang, Frederick E., 11816 Caplinger Road, Silver Spring Maryland 20904 (US)**

(74) Representative: **Lemoine, Robert et al, Cabinet Malémont 42, Avenue du Président Wilson, F-75116 Paris (FR)**

(54) **Memory alloy thermal motor.**

(57) The disclosed thermal motor utilizes the unidirectional contraction of a nickel-titanium alloy wire (12) heated above its transition temperature to convert thermal energy to mechanical energy. Force exerted by the contracting alloy wire (12), which has been resistively heated electrically, is transmitted by a rectilinearly moveable force transfer member (16). In the one embodiment, a pivoted pawl (36) coupled to the force transfer member cooperates with a rotatable, shaft-mounted ratchet (28) to provide a rotary mechanical output. In another embodiment the piston (54) of a reciprocating pump (46) is coupled to the force transfer member (16) and the force of the contracting alloy wire (12) powers the pump.

-1-

MEMORY ALLOY THERMAL MOTOR

BACKGROUND OF THE INVENTION

This invention relates to a thermal-mechanical energy conversion system, and is more particularly directed to a thermal motor which utilizes the unidirectional contraction and elongation of a heated wire of a memory alloy material to convert thermal energy into mechanical energy.

A number of apparatuses have been proposed which utilize the unique properties of "memory alloys" to convert thermal energy into mechanical energy. A "memory" or "shape memory" alloy is a material which, after it has been impressed with a given shape by appropriate heat treatment, will return abruptly to that shape when heated above its transition temperature. Below this temperature, the material is highly ductile and can be deformed with substantially less force than that developed by the material in returning to its annealed shape. The transition temperature of a shape memory material is established by the composition of the alloy. Because of the controllable and sharply-defined nature of this temperature, as well as the repeatability of the deformation-reformation cycle, such alloys have been used as thermal-mechanical transducers in energy conversion systems. One material which exhibits this shape memory characteristic is Nitinol, an alloy of nickel and titanium. Examples of energy conversion apparatuses utilizing Nitinol are disclosed in U.S. Patent Nos. 4,117,680, 4,086,769, 4,055,955, 4,037,411, 4,030,298, 4,027,479, 4,010,612, 3,937,019, 3,913,326 and 3,303,642.

A Nitinol wire, properly heat-treated, will contract as much as six percent of its length when it is heated above its transition temperature, and will exert a considerable force during the contraction. One obstacle in using this unidirectional force in an energy conversion device is the time differences involved in the contraction and elongation cycles of a Nitinol wire. The time required to heat the wire to its transition temperature is dependent upon its size and length, but is generally relatively short in comparison to the time required for the element to cool and elongate. This results in long delay times between cycle phases when useful mechanical energy can be produced.

Attempts to overcome this and other obstacles have involved grouping or "ganging" Nitinol wires and other elements together to multiply and overlap the output of an individual element. This, however, introduces the problem of synchronizing the individual elements to produce a coherent output, thus requiring more complex control mechanisms.

Of the patents cited above, U.S. Patent No. 3,937,019, issued to Renner, discloses a thermal engine in which a plurality of elongated, nickel-titanium tubular elements are resiliently coupled to a crankshaft or to the rotary output of a swashplate. The elements are ducted, and heating and cooling fluids are alternately cycled therethrough to heat and cool the tubes pass the transition temperature, thus producing a periodic extension and contraction of the element which is translated into rotational force. A fuel is burned to heat the fluid cycled through the engine, and equipment and controls are required to regulate the circulation of the fluids. U.S. Patent No. 4,086,769, issued to Smith, discloses a similar engine in which a plurality of nickel-titanium springs is coupled to a crankshaft and alternately subjected to circulated hot and cold water.

Devices have been proposed, such as those described in U.S. Patents 3,883,885, 3,676,815 and 3,634,803, in which an element of nickel-titanium alloy is electrically heated, with the deformation of the element used to move a lever pivotally connected to the element. These devices are used to control an electrical switch (3,676,815 and 3,634,803) or to trip a camera shutter (3,883,885), but do not provide a work-producing output such as provided by a motor or engine.

Proposals have also been made to couple a pawl-and-ratchet arrangement to a heat-responsive member to convert linear motion to rotary motion, such as disclosed in U.S. Patents 3,699,769 and 2,468,996. The heat-responsive member, however, has been a material possessing a high coefficient of expansion, not a nickel titanium alloy. Attempts have also been made to utilize the motion produced by a heat-responsive member to drive a pump. Examples may be found in U.S. Patents 4,087,971, 4,031,704 and 4,014,170. The first of these, issued to Hart, uses the bending-and-straightening action of a shape memory alloy tube to reciprocate a piston. The alloy tube may be electrically heated to achieve its piston-driving action, but there is no mechanism disclosed for controlling the heating or to make the pump operation self-regulating.

In general, the prior thermal engines, such as in the Smith and Renner patents have been of limited output power or of a complexity that practical applications have been limited. To provide a thermal engine of adequate output power, it has been necessary to couple a plurality of individual transducer elements. This increased power, however, has only been achieved at the expense of increased complexity, due in part to the need to synchronize the output of the individual transducers.

-4-

## SUMMARY OF THE INVENTION

Accordingly, it is an object of the present invention to provide a thermal motor utilizing an element of shape memory material as the thermal-mechanical energy transducer.

Another object of the invention is to provide a thermal motor of the foregoing type which is efficient and simple in construction.

Another object of the present invention is to provide a thermal motor of the foregoing type which is lighter in weight and more compact in size in comparison to existing devices of comparable power.

Yet another object of the present invention is to provide a thermal motor of the foregoing type which does not require synchronization of the output of the individual transducers, and needs a minimum of simple control mechanisms.

A further object of the present invention is to provide a thermal motor of the foregoing type in which the thermal-mechanical energy transducer utilizes the unidirectional deformation of a shape memory material.

Yet another object of the present invention is to provide a thermal motor of the foregoing type in which electric resistance heating provides rapid heating and reduced heat loss.

These and other objects of the present invention are achieved in a thermal motor having a plurality of thermal-mechanical transducer units, each unit having a wire of shape memory material coupled to a reciprocable force-transmitting rod. Contact elements are supported on the rod to make and break electrical contact as the rod is reciprocated by the contraction and elongation of the wire. Electric current through the transducer unit resistively heats the shape memory wire above its

-5-

transition temperature, causing it to contract unidirectionally to move the rod. Contraction of the wire and translation of the rod breaks the electrical contact, permitting the wire to cool below its transition temperature.

A pawl element pivotally supported on the rod cooperates with a ratchet disposed adjacent to the rod to convert the longitudinal force exerted on the rod by the contracting wire into a rotary force applied to the ratchet. A motor of increased output power may be achieved by using a plurality of transducer units, with the ratchet elements being supported on a common output member. Since the force transmitting pawls are freely supported on the reciprocating rods, and are free wheeling with respect to the ratchet during the non-power transmitting or wire elongation portion of the cycle, each transducer unit operates independently, thus eliminating the requirement for synchronization among the units in transferring their output to the common output member.

In an alternate embodiment, the longitudinal force exerted on the rod by the contraction of the wire is utilized to power a reciprocating pump by connecting the pump piston to the rod.

BRIEF DESCRIPTION OF THE DRAWINGS

The above description, as well as further objects, features and advantages of the present invention, will be more fully appreciated by reference to the following description of presently-preferred but nonetheless illustrative embodiments in accordance with the invention, and the accompanying drawings, wherein:

FIGS. 1a-1c are diagrammatic representations of a side elevation of one of the thermal-mechanical transducer units in the thermal motor of the present invention, illustrating different phases in the operation of the unit;

FIGS. 2a-2c are partial views, to a larger scale, illustrating the operation of the force transmitting assembly of the transducer unit;

FIG. 3 is a plan view of the thermal motor;

FIG. 4 is a view similar to FIGS. 1a-1c, showing a transducer unit coupled to a pump; and

FIG. 5 is a cross-sectional view of the pump of FIG. 4.

DESCRIPTION OF THE PREFERRED EMBODIMENT

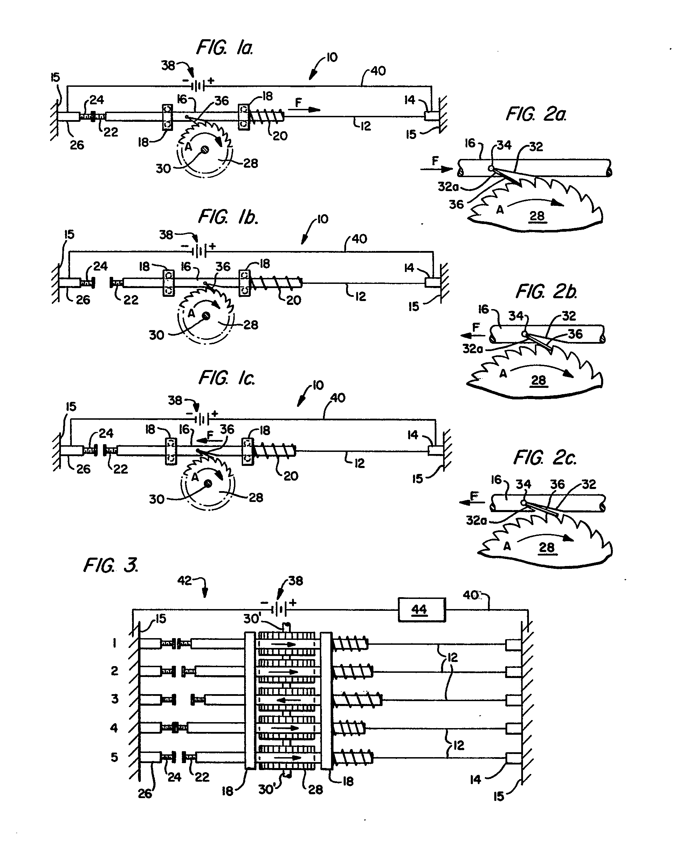

Referring now to the drawings, and particularly to Figs. 1a and 2a, a thermal-to-mechanical energy transducer unit 10 employed in the thermal motor of the present invention includes a wire 12 made of a shape memory material, such as a nickel-titanium alloy commonly known as Nitinol. The wire 12 is secured at one end to a fixed support element 14 attached to a motor housing 15, and the other end of the wire is attached to one end of a rod 16 slidably supported by a pair of spaced rod support elements 18, each of which is provided with a bearing or other suitable anti-friction surface (not shown). A spring 20 is coiled around the end of the rod 16 to which the wire 12 is attached, with the ends of the spring suitably attached to this end of the rod and to one of the support elements 18. A contact member 22 is secured to the other end of the rod 16, and cooperates with a second contact member 24 attached to a fixed support 26 on the motor housing 15 to establish an electric path through the transducer unit 10.

As shown in Figs. 1a and 2a, a gear 28 is rotably supported by an axle 30 disposed in cooperative relation to the rod 16. The lower surface of the rod 16 adjacent to the gear 28 is provided with a notch 32, which may be triangular in configuration and open in the direction of the movement of the rod and in the direction of rotation of the gear, i.e., to the right in the figures of the drawings. Pivotally supported for free swinging motion about a pin 34 disposed in the rod 12 is a flat plate member 36 which normally rests against a lower, inclined surface 32a of the notch 32. It can be seen that the gear 28 and the flat plate member 36 operate in a manner similar to a pawl and ratchet mechanism, and accordingly, the gear will hereafter be referred to as a ratchet 28 and the flat plate member will be referred to as a pawl 36 for the sake of convenience.

An electric power source 38 is connected to the unit 10 via the fixed support elements 14 and 26 by a suitable conductor 40. From the support elements 14, 26, the electric current flows through the contact members 22, 24, the rod 16 and the wire 12. For this purpose, these structures are of a suitable, electrically conductive material having sufficient strength characteristics. Alternatively, the current can be provided to the wire 12 by separate conductors (not shown) which are connected to the ends of the wire.

The operation of the thermal-mechanical transducer unit 10 is illustrated in Figs. 1a-1c and 2a-2c. In the condition shown in Fig. 1a, the temperature of the wire 12 is below its transition temperature, $T_S$, and the wire is in its relaxed or stretched length. The spring 20 is compressed between its attachment points on the support element 18 and the end of the rod 16, and the contact members 22, 24 are, for the sake of illustration, at the instant of making electrical contact. As shown in Fig. 2a the pawl 36 is on the lower, inclined surface 32a of the notch 32, and is riding on the outer curved

0045250

-8-

surfaces of the teeth on the ratchet 28, which may be rotating clockwise, in the direction of the arrow A. When the contact members 22, 24 establish electrical contact, current flows from the power source 38, through the conductor 40, and through the electrical path formed by the fixed support elements 14, 26, contact members 22, 24, the rod 16 and the wire 12. This current flow causes the wire 12 to heat resistively, and raises the temperature of the wire to its transition temperature, $T_s$. The wire then contracts unidirectionally, against the bias of the spring 20, causing the contact members 22, 24 to separate and break the electrical circuit, thus permitting the wire 12 to begin cooling.

The force of the unidirectional contraction of the wire 12 is transmitted to the ratchet 28 via the pawl 36. As shown in Figs. 1b and 2b, contraction of the wire 12 pulls the rod 16 to the right, causing the pawl 36 to engage one of the teeth on the ratchet 28. With the ratchet 28 continually rotating, the greater speed of movement of the rod 16 causes the pawl 36 to rotate the ratchet 28 in the direction of the arrow A. Further movement of the rod 16 and continued rotation of the ratchet 28 causes the pawl to disengage from the ratchet, as shown in Figs. 1b and 2b.

As the wire 12 cools below its transition temperature, it begins to elongate and return to its original length, permitting the contact members 22, 24 to re-establish electrical contact and repeat the process as described above. The return of the spring 20 to its unstretched length provides the necessary force to slide the rod 16 to the left in the Figures, to permit re-establishment of electrical contact, as well as augments the return
of the wire 12 to its normal length. As the rod
16 moves to the left, the freely swinging pawl 36
rides over the tips of the teeth on the ratchet
28, without exerting any undue restraining force
or friction upon the ratchet.

Fig. 3 shows the plan view of a thermal motor 42 in
which the output power of a plurality of transducer units 10
is provided to a common output member. For the sake of
illustration, five separate thermal-mechanical transducer
units numbered 1-5, each being identical to the unit 10
described above, have been coupled together, with the
individual, corresponding ratchets 28 fixed onto a
common, rotatable axel 30'. While not specifically
shown in Fig. 3, the axel 30' would be connected to an
output assembly, which may include a flywheel to ensure
a smooth rotary output motion. The structure and operation
of each unit 10 shown in Fig. 3 are identical to that
disclosed above, and various operational phases can be
seen in the Figure.

The electric current from the power source 38 is
transmitted via a controller 44 through suitable conducting
elements disposed within the engine housing 15, and to
the respective units 10. The controller 44, which may
be a solid state device of known design, regulates the
voltage supplied to each of the units 10 during start-
up, and during operation of the motor to control the
motor speed. Optionally, the controller may be used to
regulate the energizing sequence for the transducer
units 10 during motor start-up. However, the operational
cycling of each unit 10 is self-regulating.

In Fig. 3, the transducer unit 4 is in the condition
corresponding to Fig. 1a described above, with units 1
and 2 illustrating further sequences in the operational
cycle. Unit 3 is in the condition of maximum contraction of the wire 12, and corresponds to the operational mode shown in Fig. 1b, while unit 5 is in the condition corresponding to that shown in Fig. 1c. Since the units 1-5 are undergoing different phases in the operational cycles, rotational force is applied to the respective ratchets 28 at different times, such that the axle 30' is continually rotated. Each of the pawls 36 contacts the teeth of the respective ratchet 28 only during the short force application period, and since the pawl is freely swinging, it rides on the tips of the ratchet teeth during the time of non-force application. In this manner, the requirement is obviated to synchronize the motion of the individual pawl members 36 with the ratchet assemblies 28 to provide a coherent output.

It can be seen that with the motor shown in Fig. 3, the power output achievable can be changed by varying the number of individual transducer units 10, or by changing the length of the wire in each unit. A Nitinol wire, when properly treated, will contract as much as 6% of its initial length when heated above its transitional temperature. For a 3 mil diameter wire, it has been found that it can displace as much as 200 grams of weight during this contraction. Based upon this data, a thermal motor with twenty transducer units, each having a wire of 10 mil diameter, will produce a power output comparable to a one horsepower electric motor.

As noted earlier, one of the primary problems encountered in a practical utilization of the unidirectional contraction of a memory alloy wire has been the need to produce a coherent output from a plurality of such wires, without the cumbersome requirement of synchronizing the output of each wire. This problem has been resolved in the present invention since there is no need to synchronize the operation of the pawl and ratchet of each individual transducer unit since the pawl element is pivotally supported on the force-transmitting rod of each unit, and not fixedly attached to the ratchet element or the wire. This permits the pawl to be free swinging, and to forcibly contact the ratchet only during the portion of the time when it is transmitting a rotational force thereto.

Another advantage achievable in the present thermal motor with the use of the controller 44 is a reduction in the cooling time required by the individual memory alloy wires 12. As noted above, maximum contraction of the wire 12, and accordingly maximum work output produced by the transducer unit 10, is achieved by heating the wire above its transitional temperature and permitting it to cool completely below this temperature. Full contraction of the wire occurs over a range of temperatures, with the lower value or threshold temperature being the transition temperature, $T_s$. Once the temperature of the wire exceeds this threshold value, it begins to contract, with the contraction reaching maximum when the temperature reaches the upper limit of the temperature range. Therefore, if sufficient voltage is applied to raise the temperature of the wire above the threshold value, but below the upper limit of the temperature range, the amount of wire contraction will be a portion of its maximum contraction, and a realizable output can be obtained, although the maximum output is not achieved. By limiting the temperature differential to which the wire is heated, the amount of cooling time is also accordingly reduced, thereby permitting an increased frequency in the contraction/elongation cycle of each wire. The reduction in the maximum output for each cycle is compensated by the increased frequency with which each wire contracts, and therefore applies a force to the ratchet assembly.

In the foregoing description, the freely pivotable pawl has been assumed to rest upon and be supported by the lower, inclined surface of the notch 32, in response to the action of gravity, for a horizontally-positioned transducer unit with the notch located along the lower surface of the rod. For those applications in which the rods would not be disposed horizontally, or where the notch would not be located along the lower surface of the rod, then the pivoted pawl would be biased by a suitable spring against the inclined surface closest to the exterior of the rod. This would still permit the pawl to respond as a freely pivotable member, and to transmit force to the ratchet during the power stroke of the cycle. Such an arrangement would find ideal application in the thermal motor of Fig. 3 if additional transducer units were required. These units would be positioned such that the spring-biased pawls would contact the lower, tangential surfaces of the ratchets 28.

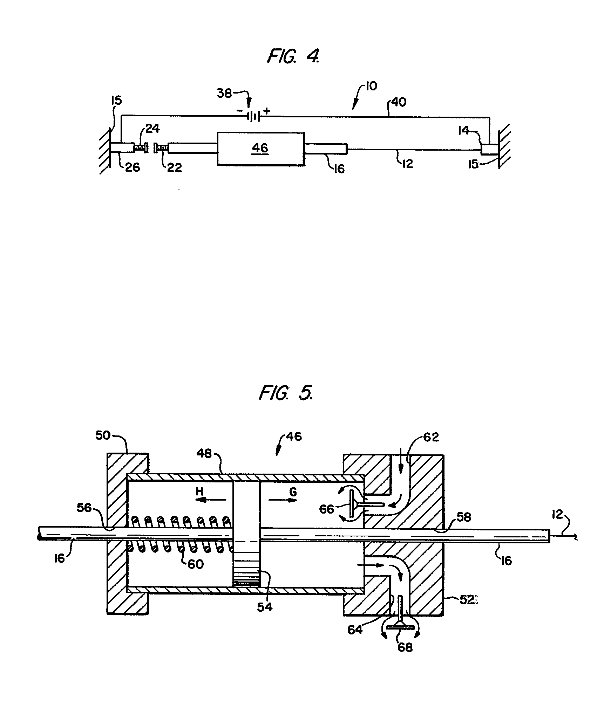

The force of the unidirectional contraction of the wire 12 may be translated into a rotary mechanical output by the pawl-and-ratchet mechanism described above, or the rectilinear motion of the rod 16 may be utilized directly to operate a pump 46, as shown schematically in FIG. 4, in which the rod is coupled to the piston of the pump.

For illustrative purposes, the structure of the pump 46 may be as shown in FIG. 5 which includes a cylinder 48 having its ends received within a support member 50 and a support block 52. A piston 54 is slidably disposed within the cylinder 48 and is connected to the rod 16 extending into the cylinder through bores 56 and 58 provided in the members 50 and 52, respectively. A piston spring 60 encircles a portion of the rod 16 within the cylinder 48 adjacent to the support member 50 and has its ends fixed to the support member and the piston 54. The support block 52 is provided with an intake passage 62 and an exhaust passage 64 which provide fluid communication with the interior of the cylinder 48. One-way valves 66 and 68 of known construction regulate the fluid flow through the passages 62 and 64, respectively.

The pump 46 is powered by the transducer unit 10, and operates in the following manner. When the transducer unit 10 is in the condition shown in FIG. 1a, the wire 12 has cooled below the transition temperature of the alloy material, and the piston spring 60 has returned to its fully-contracted state, moving the piston 54 to its far left position (as viewed in FIG. 5) during contraction and placing the rod 16 and the wire in the positions shown in FIG. 1a. During movement of the piston 54 to the left, a reduced-pressure condition is created within the cylinder 58, to the right of the piston, causing the intake valve 66 to open and drawing fluid through the intake passage 62, and closing the exhaust valve 68.

Upon completion of the electrical circuit by the contacts, 22, 24, the wire 12 is resistively heated above its transition temperature, and its unidirectional contraction forcibly displaces the rod 16 and piston 54 to the right (as viewed in FIG. 5), in the direction of the arrow G, against the pull of the piston spring 60. The increased pressure caused by the displaced piston 54 closes the intake valve 66 to shut the passage 62 and opens the exhaust valve 68, forcing the fluid within the cylinder 48 through the passage 64.

Breaking of the electrical contact permits the wire 12 to cool, and the force of the contracting piston spring 60 moves the piston 54 in the direction of the arrow H in FIG. 5, and assists in the return of

-14-

the wire to its elongated shape. The subsequent actions of the piston 54 and valves 66, 68 are as previously described.

In the operational sequence described above, in which the intake and exhaust valves are free to respond to pressure differentials between the cylinder's interior and the fluid passages, the described structure functions as a pump to displace fluid. However, the operational timing of the exhaust valve may be selectively regulated in any known manner to cause the pump to function as a compressor.

While not specifically described or shown in the drawings, it is understood that the pump would be provided with fluid seals as required, such as on the piston and around the bores through which the rod passes. The working fluid may be a gas or a liquid, and the fluid passages would be appropriately connected to the fluid source and sink. The piston spring may be positioned within the cylinder as shown in FIG. 5, or may be positioned exteriorly of the cylinder, in the manner shown in FIGS. 1a-1c. In either position the spring may be of the tension type as shown, or of the compression type. Additionally, a plurality of piston-and-cylinder mechanisms may be coupled together, and it may be desirable, although it is not necessary, to join the fluid passages to common intake and exhaust manifolds. A controller, such as the controller 44 shown in FIG. 3, may be provided to regulate the voltage supplied to the individual transducer units during start-up of the multiple-piston pump, to regulate the energizing sequence of the transducer units during pump start-up, and to regulate the supplied voltage during pump operation to control its speed. However, the operational cycling of each pump assembly is self regulating.

0045250

-15-

The advantage noted above regarding the use of a controller to limit the temperature differential to which the wire is heated, and thereby reducing the cooling time and increasing the frequency of the contraction/elongation cycle of each wire, is also achieveable with the multiple-piston pump. The reduction in the maximum output for each cycle is compensated by the increased frequency with which each wire contracts, and therefore, applies a force to displace the pump piston.

Although not particularly illustrated in the drawings, it is understood that all of the components described above are arranged and supported in an appropriate fashion to form a complete and operative system. Further, it is understood that all ancillary components have not been specifically described, but such components are known in the art and would be appropriately incorporated into the operative system.

Of course, variations of the specific construction and arrangement of the thermal motor and pump disclosed above can be made by those skilled in the art without departing from the invention as defined in the appended claims.

1

Claims :

1.   An apparatus for converting thermal energy to mechanical energy, comprising :

a temperature-responsive thermal-to-mechanical energy transducer (12) which experiences physical deformation above a predetermined temperature ;

a rotatable output member  (28) ;

a reciprocable member (16) coupled to the transducer (12) and moveable in response to the deformation of said transducer ;

an element (36) pivotally disposed on the reciprocable member and adapted to engage and apply a force to the rotatable output member upon movement of said reciprocable member ; and

means for providing and electrical current to resistively heat the transducer above said predetermined temperature.

2.   An apparatus for converting thermal energy to mechanical energy, comprising :

a temperature-responsive thermal-to-mechanical energy transducer (12) which experiences physical deformation above a predetermined temperature ;

a reciprocable member (16) coupled to the transducer and moveable in response to the deformation of said transducer, to transmit a force resulting from said deformation ;

a fluid handling means (46) coupled to said reciprocable member (16) ; and

means for providing an electric current to resistively heat the transducer above said  predetermined temperature.

3.     An apparatus as defined in Claim 2, wherein said fluid handling means (46) comprises :

a fluid chamber ;

means (54) within said chamber for displacing fluid ; and flow control means (66, 68) for regulating the fluid flow to and from said chamber.

4.  An apparatus as defined in any of Claims 1-3, wherein the means for providing an electric current includes means (22, 24) coupled between an electric power source (38) and the transducer and adapted to establish current flow when said transducer (12) is not deformed and to interrupt current flow when said transducer
has been heated above said predetermined temperature.

5. An apparatus as defined in any of Claims 1-3, wherein the
transducer (12) is of a shape memory material which undergoes
physical deformation above a predetermined temperature.

6. An apparatus for converting thermal energy to mechanical
energy comprising :

an element (12) of shape memory material which undergoes a
physical deformation when heated to a predetermined temperature ;

reciprocable means (16) operatively coupled to said shape
memory element for producing a linear motion in response to the
deformation of said element ;

rotatable means (28) disposed in cooperative relation to said
reciprocable means ;

means for applying a force to said rotatable means upon
movement of said reciprocable means ; and

electric current control means (22, 24) responsive to the
deformation and reformation of said shape memory element to
disconnect and establish, respectively, current flow to said
element to resistively heat said element.

7. An apparatus as defined in Claim 6, wherein the means for
applying a force includes a member (36) pivotally disposed on
reciprocable means (16).

8. An apparatus as defined in Claim 6, wherein :
said rotatable means (28) comprises a gear element, and
said means for applying a force includes a member (36) pivotally disposed on said reciprocable means (16) and engageable
with said gear element to apply a rotating force in response
to deformation of said shape memory element (12).

9. An apparatus for converting thermal energy-to-mechanical
energy comprising :

an element (12) of shape memory material which undergoes
a physical deformation when heated to a predetermined temperature ;

reciprocable means (16) operatively coupled to said shape

3

memory element for producing a linear motion in response to the deformation of said element ;

fluid handling means (46) coupled to said reciprocable means ; and

electric current control means (22, 24) responsive to the deformation and reformation of said shape memory element to disconnect and establish, respectively, current flow to said element to resistively heat said element.

10. An apparatus as defined in Claim 9, wherein said fluid handling means (46) comprises :

a fluid chamber ;

a piston element (54) coupled to said reciprocable means (16) and moveably disposed within said chamber ; and

flow control means (66, 68) for regulating fluid flow to and from said chamber.

11. A thermal engine comprising :

at least two thermal-to-mechanical energy conversion assemblies (10) each assembly comprising :

a temperature-responsive thermal-to-mechanical energy transducer (12) which undergoes physical deformation above a predetermined temperature ;

means (16) coupled to the transducer for providing a mechanical output in response to the deformation of the transducer ; and

means for providing an electric current to resistively heat the transducer above said predetermined temperature ; and

means for coupling on a common output the mechanical output means of each said assembly.

12. A thermal engine as defined in Claim 11, wherein the means for providing a mechanical output includes :

a rotatable output member (28) for each of said assemblies, said output members being rotatably supported on a common rotatable shaft (30') ; and

means (36) for each assembly disposed in cooperative relation to the transducer and the rotatable output member for applying force to said output member in response to the deformation of said transducer.

4

13. A thermal engine as defined in Claim 12, wherein the force applying for each of said assemblies includes :

a reciprocable member (16) coupled to the transducer and moveable in response to the deformation of said transducer (12); and

an element (36) pivotally disposed on the reciprocable member and adapted to engage and apply a force to the rotatable output member (28) upon movement of said reciprocable member.

14. A thermal engine as defined in any of Claims 11-13, wherein the means for providing an electric current includes, for each assembly, means (22, 24), coupled between an electric power source (38) and the transducer, and adapted to establish current flow when said transducer is not deformed and to interrupt current flow when said transducer has been heated above said predetermined temperature.

15. A thermal engine as defined in Claim 14, further including control means coupled between said electric power source (38) and said energy conversion assemblies to regulate the current provided each of said conversion assemblies.

16. A thermal engine as defined in any of Claims 11-15, wherein the transducer (12) of each of said energy conversion unit (10) is of a shape memory material which undergoes physical deformation above a predetermined temperature.

17. A thermal engine comprising :

at least two thermal-to-mechanical energy conversion assemblies (10), each assembly comprising :

an element (12) of shape memory material which undergoes physical deformation when heated to a predetermined temperature ;

reciprocable means (16) operatively coupled to said shape memory element for producing a linear motion in response to the deformation of said element ;

rotatable means (28) disposed in cooperative relation to said reciprocable means ;

means for applying a force to said rotatable means upon movement of said reciprocable means ; and

electric current control means (22, 24) responsive to the deformation and reformation of said shape memory element to interrupt and establish, respectively, current flow from an electric power source (38) to said element to resistively heat said element ; and

rotatable support means for supporting on a common output member the rotatable means of said energy conversion assemblies.

18. A thermal engine as defined in Claim 17, wherein the means for applying a force includes a member (36) pivotally disposed on said reciprocable means (16).

19. A thermal engine as defined in Claim 17, wherein :

said rotatable means (28) comprises gear elements disposed on said common rotatable support means ; and

said means for applying a force includes a member (36) pivotally disposed on said reciprocable means and engageable with said gear elements to apply a rotating force in response to deformation of said shape memory element.

20. A thermal engine as defined in any of Claims 17-19, further including regulator means (44) coupled between the electric power source (38) and said energy conversion assemblies to regulate the current provided each of said conversion assemblies.

21. A thermal engine operated pump comprising :

at least two thermal-to-mechanical energy conversion assemblies (10), each assembly comprising :

an element (12) of shape memory material which undergoes physical deformation when heated to a predetermined temperature ;

reciprocable means (16) operatively coupled to said shape memory element for producing a linear motion in response to the deformation of said element ;

fluid handling means (46) coupled to said reciprocable means ; and

electric current control means (22, 24) responsive to the deformation and reformation of said shape memory element to interrupt and establish, respectively, current flow from an electric power source to said element to resistively heat said element.

22. A thermal engine operated pump as defined in Claim 21, wherein said fluid handling means (46) comprises :

a fluid chamber ;

a piston element (54) coupled to said reciprocable means (16) and moveably disposed within said chamber ; and

flow control means (64, 66) for regulating fluid flow to and from said chamber.

23. A thermal engine operated pump as defined in Claim 22, further including conduit means (62, 64) interconnecting the fluid chambers of the energy conversion assemblies.

24. A thermal engine operated pump as defined in any of Claims 21-23, further including regulator means (44) coupled between the electric power source (38) and said energy conversion assemblies (10) to regulate the current provided each of said conversion assemblies.

Pl. I - 2

0045250

FIG. 1a.

FIG. 2a.

FIG. 1b.

FIG. 2b.

FIG. 1c.

FIG. 2c.

FIG. 3.

Pl. II - 2

*FIG. 4.*

*FIG. 5.*

| Category | Citation of document with indication, where appropriate, of relevant passages | Relevant to claim |
|---|---|---|
| | US - A - 3 142 149 (HAYS)<br>* Column 1, lines 8,9 and 33-38; column 2, line 36 - column 4, line 12; figure 1 * | 1,4 |
| D | US - A - 2 468 996 (OLSON)<br>* Column 1, line 39 to column 3, line 55; figures 1-4 * | 1,4,6, 8 |
| D | US - A - 4 087 971 (HART)<br>* Column 10, lines 11-14; column 14, lines 28-50; figures 30,31 * | 2,3,5, 9,10 |
| | US - A -4 075 845 (ALLEN)<br>* Column 1, lines 6-58 * | 1 |
| | JOURNAL OF PHYSICS E. SCIENTIFIC INSTRUMENTS, vol. 10, no. 4, April 1977, London, GB<br>H.J. BAUER: "Mechanical motions in small inaccessible volumes" page 332-334.<br>* Page 333, right-hand column, lines 4-38; figures 1a,d * | 1 |
| DA | US - A - 3 676 815 (DU ROCHER)<br>* Column 3, line 15 to column 4, line 28 * | 1 |

./.

**DOCUMENTS CONSIDERED TO BE RELEVANT**

**CLASSIFICATION OF THE APPLICATION (Int. Cl.³)**

F 03 G 7/06

**TECHNICAL FIELDS SEARCHED (Int. Cl.³)**

F 03 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-10-1981 | TATUS |

EPO Form 1503.1   06.78

## DOCUMENTS CONSIDERED TO BE RELEVANT

| Category | Citation of document with indication, where appropriate, of relevant passages | Relevant to claim |
|---|---|---|
| DA | US - A - 4 031 704 (MOORE) <br> * Page 1, abstract * <br><br> -- | 2,3 |
| DA | US - A - 3 699 769 (BONDURANT) <br> * Page 1, abstract * <br><br> ---- | 17,18, 19 |

CLASSIFICATION OF THE APPLICATION (Int. Cl.³)

TECHNICAL FIELDS SEARCHED (Int. Cl.³)

EPO Form 1503.2  06.78